# EUROPEAN PATENT APPLICATION

(11) **EP 2 206 570 A1**
(43) Date of publication of application: **14.07.2010**
(21) Application number: 08846633.9
(22) Date of filing: 31.10.2008
(51) Int. Cl.: B23B 3/30, B23B 15/00, B23B 21/00, B23B 29/24

(54) **MACHINE TOOL**

(30) Priority: 09.11.2007 JP 2007292277
(71) Applicant: Citizen Machinery Co., Ltd., Nagano 389-0294 (JP)
(72) Inventor: KASUYA, Hiroshi, Kitasaku-gun Nagano 389-0294 (JP)
(74) Representative: Borchert, Uwe Rudolf
(86) International application number: PCT/JP2008/003148
(87) International publication number: WO 2009/060580

(57) **Abstract**

[Problem] The invention provides a machining tool capable of improving work production efficiency and downsizing the whole machine.

[Solution] In the machining tool having a plurality of spindles 111 and a plurality of tool rests 120, the respective tool rests 120 are disposed on the side of the end surface of the spindles 111, a workpiece holding means 130 is provided at least on one of the neighboring two tool rests 120, a moving range of the tool rest 120 having the workpiece holding means 130 is set so as to include position where the both spindles 111 face to the workpiece holding means 130, a moving range of the tool rest 120 corresponding to the neighboring spindle 111 described above is set so that at least part thereof overlaps with the moving range of the tool rest 120 and so that it is slidably moved to position for avoiding the tool rests 120 from abutting from each other.

## Description

### MACHINING TOOL

### TECHNOLOGICAL FIELD

The present invention relates to a machining tool for cutting a workpiece.

### BACKGROUND TECHNOLOGY

Hitherto, there has been known a machining tool having first and second spindles provided in parallel from each other while being separated by a predetermined distance, first and second tool rests corresponding to these first and second spindles and a back spindle disposed so as to face to the first and second spindles and relatively movable in a direction connecting axial centers of the both spindles and a direction of approaching to and separating from the both spindles (see
Patent Document 1 for example).
Patent Document 1: Japanese Patent Application Laid-open No. Hei. 8-112738 (Claims, FIG. 3)

### DISCLOSURE OF THE INVENTION

### Problems to be Solved by the Invention

However, although the prior art machining tool as disclosed in Patent Document 1 is capable of transferring an unfinished workpiece between the first and second spindles through an intermediary of the back spindle in machining the workpiece held and machined by one spindle by transferring to another spindle, the machining tool has a problem that it needs a back spindle slide, a spindle motor, a guide rail and others to function the back spindle and hence the system structure of the machining tool becomes complicated and large.

Still more, because the first and second tool rests are disposed respectively above and under the first and second spindles, the prior art machining tool has a problem that it requires a wide tool rest installation space in the vertical direction and hence the overall height of the machining tool increases.

### Means for Solving the Problems

According to Claim 1 of the invention, in a machining tool having a plurality of spindles that hold workpieces on the side of one end surface thereof and a plurality of tool rests corresponding to the respective spindles, the respective spindles are juxtaposed in the X-axis direction orthogonal to the Z-axis direction that is an axial direction thereof while directing a workpiece holding-side end surface in the same one direction and the respective tool rests are disposed movably in the X-axis direction. The machining tool machines the workpiece held by the spindle by tools mounted on the tool rests by moving the tool rests in the X-axis direction and moving the spindles and the tool rests relatively in the Z-axis direction. The machining tool is arranged such that the respective tool rests are disposed so as to face to the spindles on the side of the end surface of the corresponding spindles, a workpiece holding means for holding the workpiece is provided at least on one of the two neighboring spindles, a moving range of the tool rest having the workpiece holding means is set so as to include position where the both spindles face to the workpiece holding means so that the workpiece may be transferred between the one spindle corresponding to the tool rest and the other spindle neighboring the one spindle, a moving range of the tool rest corresponding to the neighboring spindle is set so that at least part thereof overlaps with the moving range of the one tool rest and so that the tool rest slides to position for avoiding the tool rests from abutting from each other in transferring the workpiece between the neighboring spindle and the workpiece holding means.

According to Claim 2 of the invention, in addition to the structure described in Claim 1, the tool rests are provided respectively movably on a common track extending in the X-axis direction.

According to Claim 3 of the invention, in addition to the structure described in Claim 1, the both tool rests are provided respectively movably on different tracks extending in the X-axis direction.

According to Claim 4 of the invention, in addition to the structure described in any one of Claims 1 through 3, the workpiece holding means is attached turnably centering on an axial line orthogonal to the X-axis and Z-axis directions. Advantages of the Invention

According to the machining tool of the invention, the tool rest having the workpiece holding means receives the machined workpiece from the spindle through the workpiece holding means and the tool rest corresponding to the neighboring spindle neighboring to the spindle moves to the position for avoiding the tool rests from abutting from each other, so that the tool rest having the workpiece holding means moves to the position facing to the neighboring spindle and the workpiece may be transferred from the workpiece holding means to the neighboring spindle.
The workpiece holding means is provided integrally with the tool rest and may transfer the workpiece by moving integrally with the tool rest. Therefore, it becomes unnecessary to provide a mechanism or the like dedicated for moving the workpiece holding means and the transfer of the workpiece from the predetermined spindle to the neighboring spindle may be carried out with the simple structure.
Thus, the invention has such an advantage that the machining tool for machining workpiece while sequentially transferring the workpiece to the neighboring spindle may be constructed simply in compact. It is noted that because the tool rest corresponding to the neighboring spindle slidably moves to the position for avoiding the tool rests from abutting each other, the transfer of the workpiece may be carried out smoothly.

Then, because the workpiece may be machined by sequentially transferring the workpiece to the plurality of spindles that perform post-machining through the intermediary of the workpiece holding means after supplying a new workpiece as a material to be machined to the spindle that performs the foremost machining among the plurality of spindles, the workpiece may be machined sequentially by the respective spindles just by providing one workpiece supplying means without providing workpiece supplying means for supplying the new workpiece to the spindle per each of the plurality of spindles.

Still more, because the plurality of spindles whose workpiece holding-side end surfaces orient in the same one direction are juxtaposed in the X-axis direction corresponding respectively to the plurality of tool rests juxtaposed in the X-axis direction, it is possible to handle all of the spindles from a work area in the same one direction and tooling and maintenance works and other of the spindles may be readily carried out.

Further, because the tool rests are supported respectively movably on a common track extending in the X-axis direction, a space for installing the tool rests required in the Z-axis direction may be kept minimum and it is possible to avoid the whole machining tool from being enlarged in the Z-axis direction.

It is noted that the tool rests may be supported respectively movably on different tracks extending in the X-axis direction.

Still more, a workpiece holding direction may be turned by 180 degrees in transferring the workpiece among the plurality of spindles and various machining may be implemented on the workpiece by the plurality of spindles by attaching the workpiece holding means turnably centering on the axial line orthogonal to the X-axis and Z-axis directions.

### BRIEF DESCRIPTION OF DRAWINGS

FIG. 1 is an overall schematic view of a machining tool according to one embodiment of the invention.
FIG. 2 is an enlarged view of a main part II in FIG. 1.
FIG. 3 is a view seen from above FIG. 2.
FIG. 4 is a view seen in a direction of arrows from the position of a line F4 - F4 in FIG. 3.
FIG. 5 is an explanatory view showing workpiece machining operations of the machining tool.
FIG. 6 is an explanatory view of a first step in the starting operation shown in FIG. 5.
FIG. 7 is an explanatory view of a second step in the starting operation shown in FIG. 5.
FIG. 8 is an explanatory view of a third step in the starting operation shown in FIG. 5.
FIG. 9 is an explanatory view of a fourth step in the starting operation shown in FIG. 5.
FIG. 10 is an explanatory view of a first step in the normal operation shown in FIG. 5.
FIG. 11 is an explanatory view of a second step in the normal operation shown in FIG. 5.
FIG. 12 is an explanatory view of a third step in the normal operation shown in FIG. 5.
FIG. 13 is an explanatory view of a fourth step in the normal operation shown in FIG. 5.
FIG. 14 is an explanatory view of a first step in the ending operation shown in FIG. 5.
FIG. 15 is an explanatory view of a second step in the ending operation shown in FIG. 5.
FIG. 16 is an explanatory view of a third step in the ending operation shown in FIG. 5.
FIG. 17 is an explanatory view of a fourth step in the ending operation shown in FIG. 5.

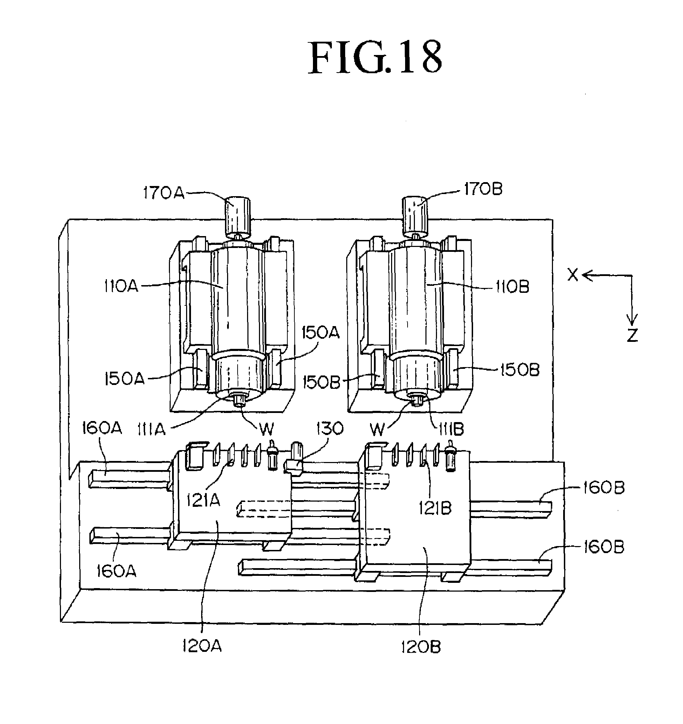

FIG. 18 shows a modified example in which the both tool rests are supported respectively on different tracks.
FIG. 19 is an explanatory view of a turnably provided workpiece holding means.
FIG. 20 is an explanatory view of the turning operation of the workpiece holding means.

### DESPRIPTION OF REFERENCE NUMERALS

- 100: machining tool
- 110A: first spindle slide
- 111A: first spindle
- 110B: second spindle slide
- 111B: second spindle
- 120A: first tool rest
- 121A: tool
- 120B: second tool rest
- 121B: tool
- 130: workpiece holding means
- 150A: rail
- 150B: rail
- 160: rail
- 170A: driving motor
- 170B: driving motor
- W: workpiece

### BEST MODE FOR CARRYING OUT THE INVENTION

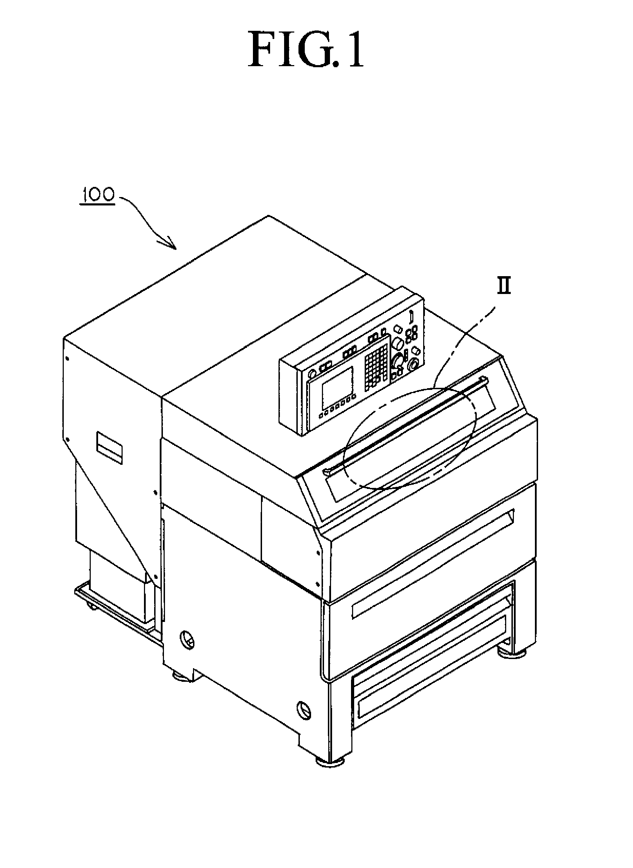

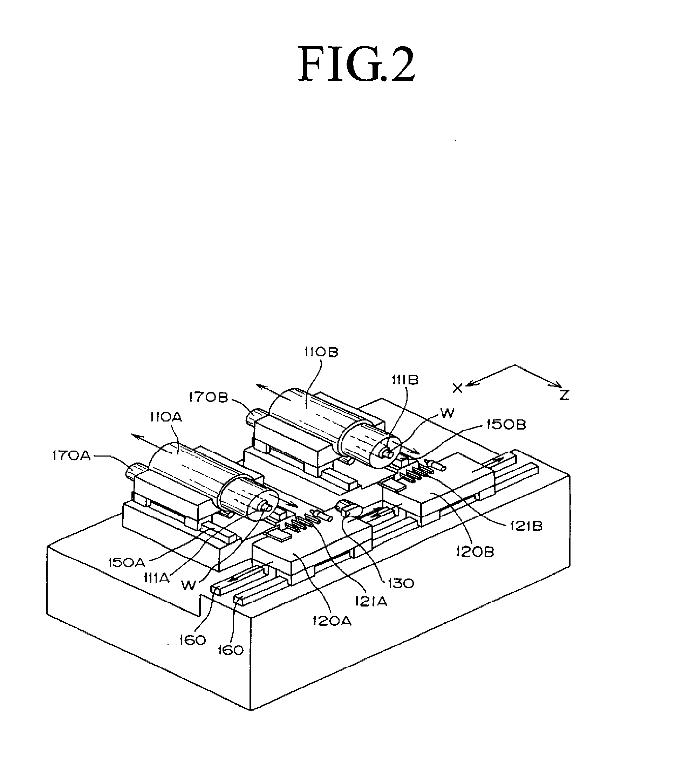

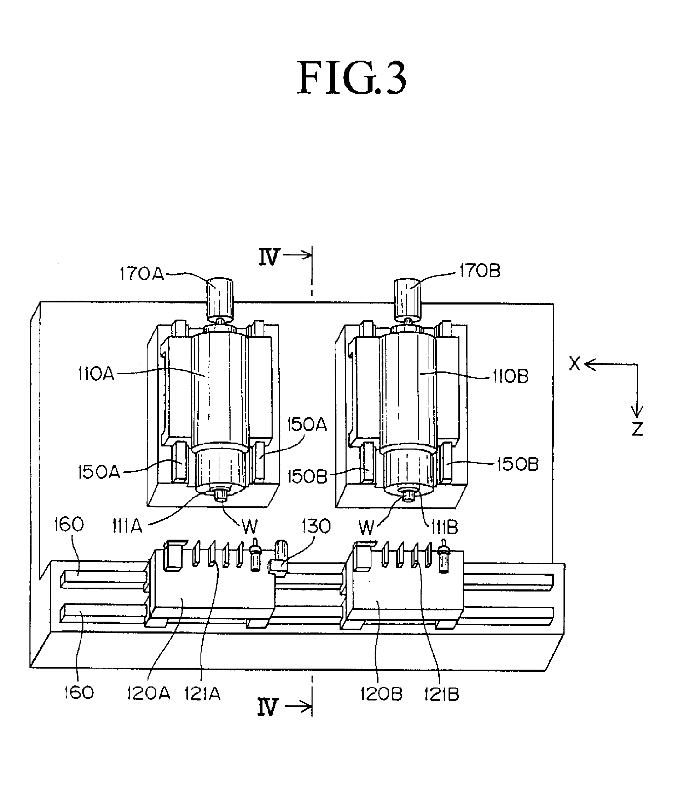

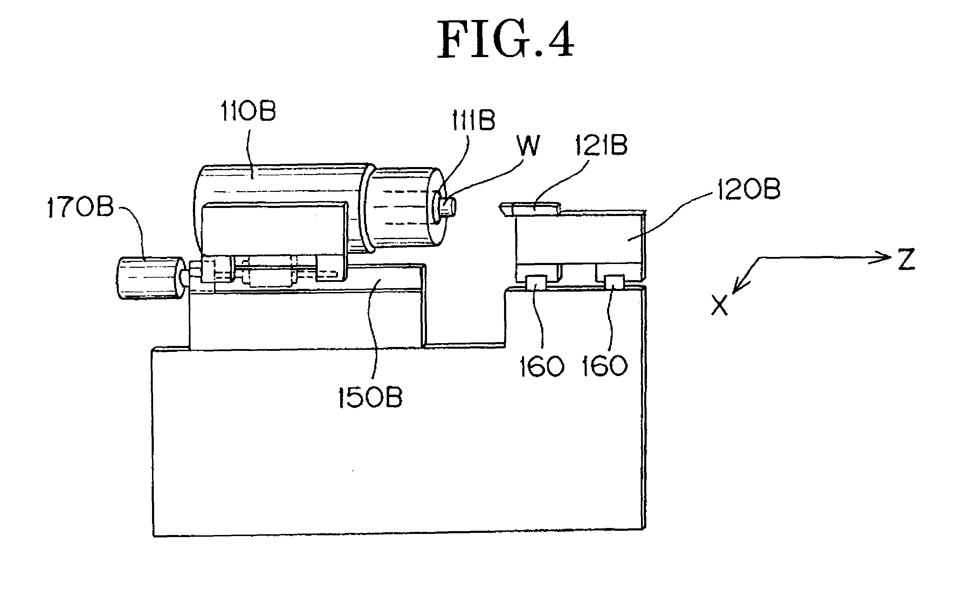

A machining tool 100 of the present embodiment shown in FIG. 1 has, within a part C, a first spindle slide 110A for turnably supporting a first spindle 111A and a second spindle slide 110B for turnably supporting a second spindle 111B as shown in FIGs. 2 through 4.
The first and second spindle slides 110A and 110B are juxtaposed side by side so that the axial direction of the first spindle 111A and the axial direction of the second spindle 111B run in parallel from each other. A chuck for gripping and holding the workpiece W is provided on the side of one end surface of the first and second spindles 111A and 111B. The both spindles 111A and 111B are disposed so that the end surfaces thereof on the side of the chuck face in the same direction.

The first spindle slide 110A is slidably mounted on rails 150A that extend in the Z-axis direction, i.e., in the axial direction of the both spindles 111A and 111B. The second spindle slide 110B is slidably mounted on the rails 150B that extend in the Z-axis direction and are fixed on the bed. The first spindle slide 110A is slidably driven along the rails 150A by a driving motor 170A and the second spindle slide 110B is slidably driven along the rails 150B by a driving motor 170B.

Rails 160 that extend in the X-axis direction, i.e., in the lateral direction orthogonal to the Z-axis direction, are mounted on a bed on the side of the chucks of the both spindle slides 110A and 110B.
The first tool rest 120A facing to the first spindle 111A and the second tool rest 120B facing to the second spindle 111B are respectively slidably mounted on the rails 160. The first and second tool rests 120A and 120B move on the same rails 160 separately from each other. The both tool rests 120A and 120B are comb-like tool rests on which machining tools 121A and 121B are juxtaposed in the X-axis direction.

The move of the first and second spindle slides 110A and 110B in the Z-axis direction and the move of the first and second tool rests 120A and 120B in the X-axis direction are controlled by a control means not shown. That is, The control means controls the respective moves of the both spindles 111A and 111B in the Z-axis direction and the respective moves of the both tool rests 120A and 120B in the X-axis direction by driving the first and second spindle slides 110A and 110B and the first and second tool rests 120A and 120B.

The workpiece W held by each of the both spindles 111A and 111B on the end surface side may be cut by the tools mounted on the tool rests 120A and 120B each corresponding to the respective spindles 111A and 111B by moving the both spindles 111A and 111B respectively in the Z-axis direction and by moving the both tool rests 120A and 120B in the X-axis direction. It is noted that the selection of the tools mounted on the respective tool rests 120A and 120B may be made by moving the tool rests 120A and 120B corresponding to the respective spindles 111A and 111B in the X-axis direction.

Although an order of the tools 121A and 131B disposed on the tool rests 120A and 120B is not specifically limited, the plurality of respective tools 121A and 121B are mounted on the respective tool rests 120A and 120B in the direction of heading from the first spindle 111A to the second spindle 111B in order of tools used in machining the workpiece in the present embodiment. Thereby, the both spindles 111A and 111B are allowed to select the tools 121A and 121B sequentially in a shortest possible time by moving in one direction of the forward moving direction of heading from the second spindle 111B to the first spindle 111A of the both tool rests 120A and 120B.

A workpiece holding means 130 is fixed to the first toolrest 120A. The workpiece holding means 130 has a chuck capable of gripping and holding the workpiece W. A movable range in the X-axis direction of the first tool rest 120A is set such that the first tool rest 120A allows the workpiece W to be machined by the respective tools 121A mounted thereon and such that the first tool rest 120A can move in the forward moving direction until when an axial line of the first spindle 111A is aligned with an axial line of the workpiece holding means 130 and can move in the reverse moving direction which is the direction opposite from the forward moving direction until when the axial line of the second spindle 120B is aligned with an axial line of the workpiece holding means 130.

When the first spindle 111A or the second spindle 111B faces to the workpiece holding means 130 such that their axial lines are aligned as described above, the workpiece W may be transferred among the spindles 111A and 111B and the workpiece holding means 130 by slidably moving the spindles 111A and 111B in the Z-axis direction and by opening and closing the chucks of the spindles 111A and 111B and the workpiece holding means 130.

It is noted that the second tool rest 120B moves in a range that allows the workpiece W to be machined by the respective tools 121B mounted thereon. Accordingly, part of the moving range of the first tool rest 120A on the upstream side (on the side of the second spindle slide 110B) of the forward moving direction overlaps with the moving range of the second tool rest 120B. Due to that, the second tool rest 120B is controlled so to move to position where the second tool rest 120B does not abut with the first tool rest 120A in transferring the workpiece between the workpiece holding means 130 and the second spindle 111B.

The arrangement described above allows the workpiece W held by the first spindle 111A to be cut by the tools 121A on the first tool rest 120A while sequentially selecting the tools by moving the first tool rest 120A in the forward moving direction and after finishing machining of the workpiece by the first spindle 111A and the first tool rest 120A, allows the workpiece W to be transferred from the first spindle 111A to the workpiece holding means 130 by moving the first tool rest 120A in the forward moving direction. After that, the first tool rest 120A is moved in the reverse moving direction, the workpiece W held by the workpiece holding means 130 is transferred to the second spindle 111B and is cut by the tools 121B on the second tool rest 120B while sequentially selecting the tools by moving the second tool rest 120B in the forward moving direction.

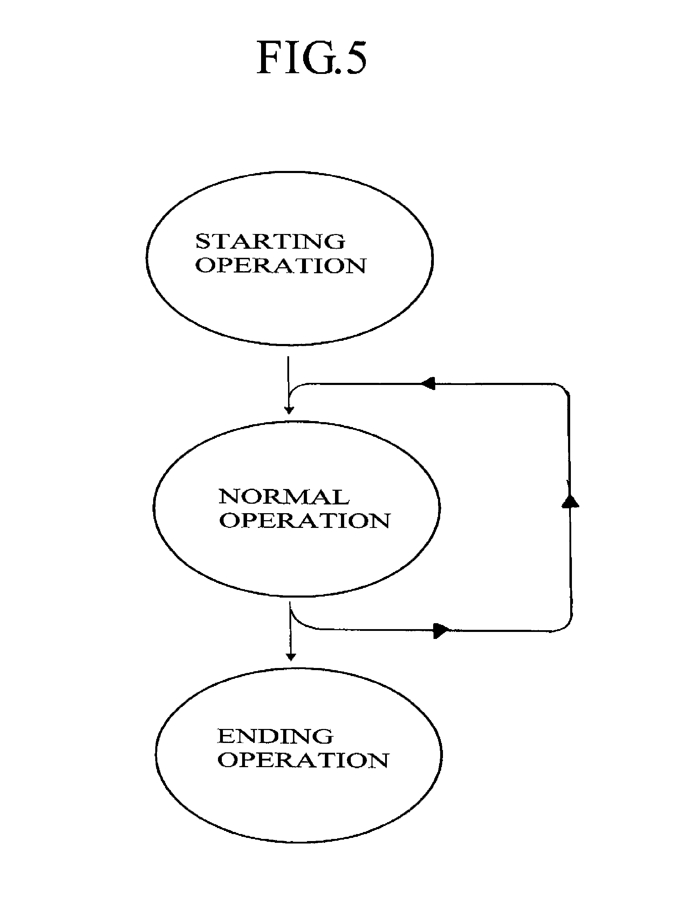

As shown in FIG. 5, a workpiece machining operation of the machining tool 100 of the present embodiment is composed of a starting operation carried out in starting the operation, a normal operation repetitively carried out after the starting operation and an ending operation carried out in ending the operation.

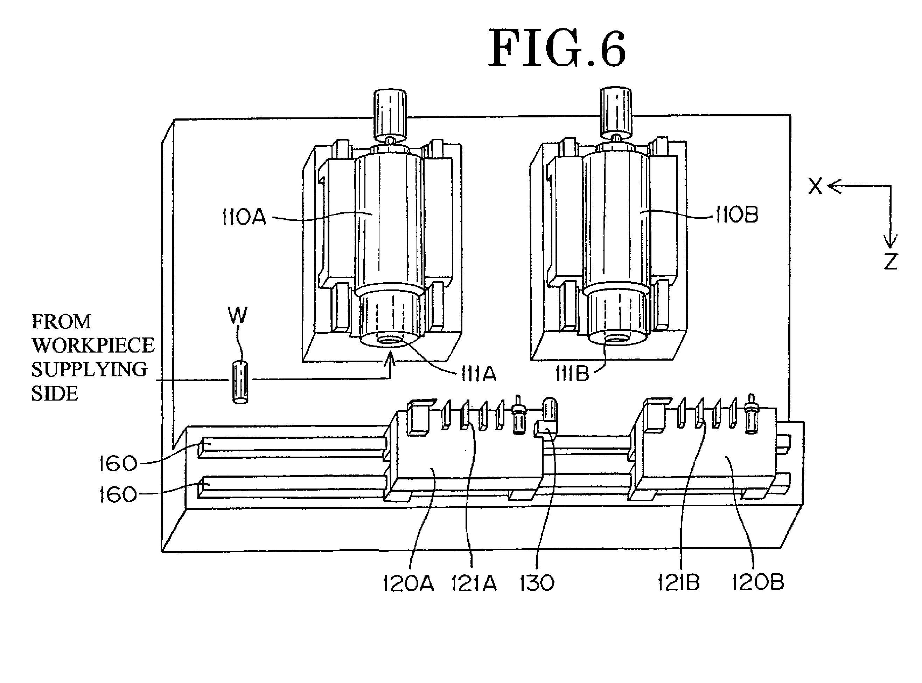

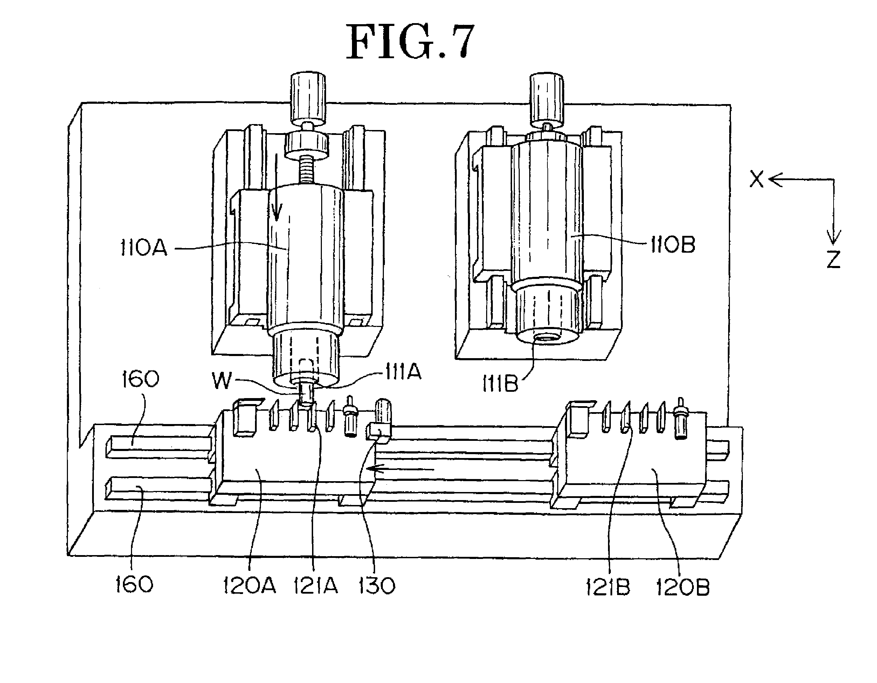

As the starting operation of the machining tool 100, from the state in which the workpiece W is supplied to the first spindle 111A by a workpiece supplying means not shown (first operation, see FIG. 6), firstly the first spindle slide 110A and the first tool rest 120A are moved in the Z-axis and X-axis directions to cut the workpiece W held by the first spindle 111A by sequentially abutting it with the respective tools 121A on the first tool rest 120A in a rotational state or the like (second operation, see FIG. 7).

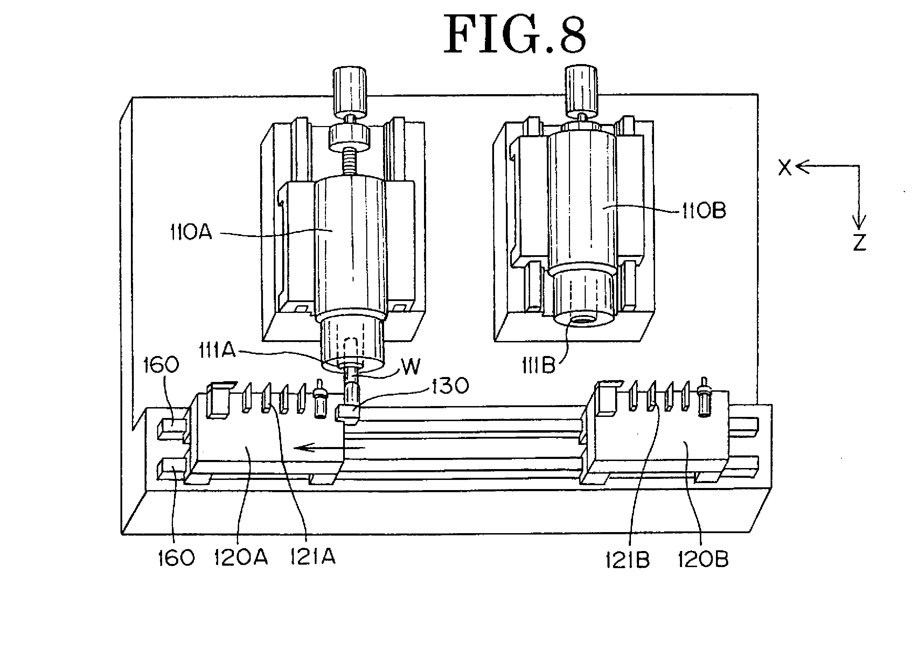

Then, in the machining tool 100, the first tool rest 120A is moved in the X-axis direction in the forward moving direction to the position where the axial line of the workpiece holding means 130 is aligned with the axial line of the first spindle 111A from each other, the first spindle slide 110A is moved in the Z-axis direction so that the first spindle 111A approaches to the workpiece holding means 130 and the workpiece is inserted into the chuck of the workpiece holding means 130 and the chuck of the first spindle 111A is opened and the chuck of the workpiece holding means 130 is closed. Thereby, the workpiece W cut by the first spindle 111A and the tools 121A is transferred from the first spindle 111A to the workpiece holding means 130 (third operation, see FIG. 8).

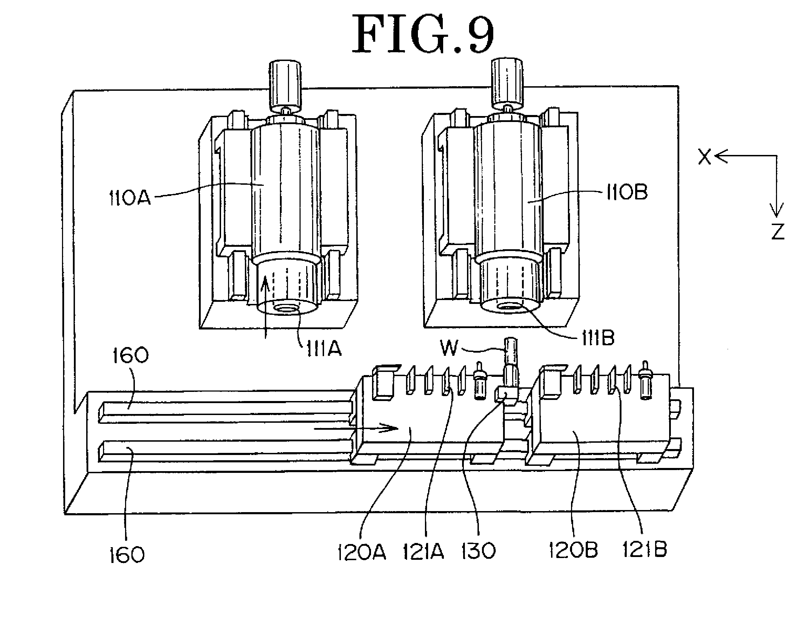

Then, the first spindle slide 110A is moved in the Z-axis direction so that the first spindle 111A backs away from the workpiece holding means 130 and the first tool rest 120A is moved in the X-axis direction in the reverse moving direction to the position where the axial line of the workpiece holding means 130 is aligned with the axial line of the second spindle 111B (fourth operation, see FIG. 9).

The series of starting operations is thus completed. It is noted that in the starting operation, the second tool rest 120B is controlled so as to stand by at position on the upstream-side of the forward moving direction where the second tool rest 120B will not hamper the move of the first tool rest 120A in the X-axis direction.

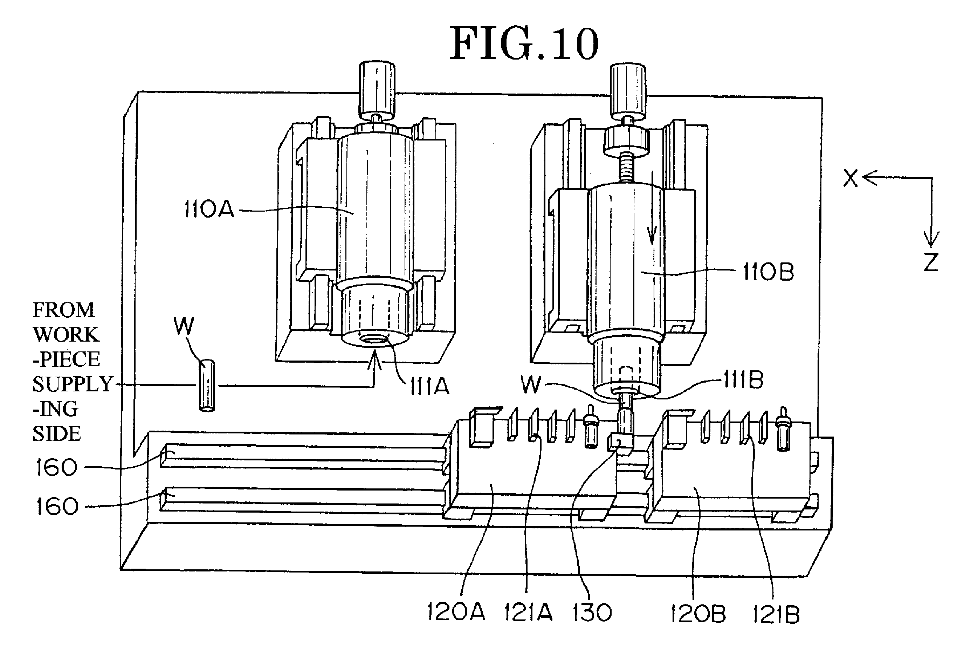

From the state in which the axial center of the second spindle 111B is aligned with the axial center of the workpiece holding means 130 in the fourth operation (FIG. 9), as the normal operation, a workpiece W is supplied from the workpiece supplying means to the first spindle 111A, the second spindle slide 110B is moved in the Z-axis direction so that the second spindle 111B approaches to the workpiece holding means 130 and the workpiece W is inserted into the chuck of the second spindle 111B and the chuck of the workpiece holding means 130 is opened and the chuck of the second spindle 111B is closed. Thereby, the workpiece W held by the workpiece holding means 130 is transferred from the workpiece holding means 130 to the second spindle 111B (first operation, see FIG. 10).

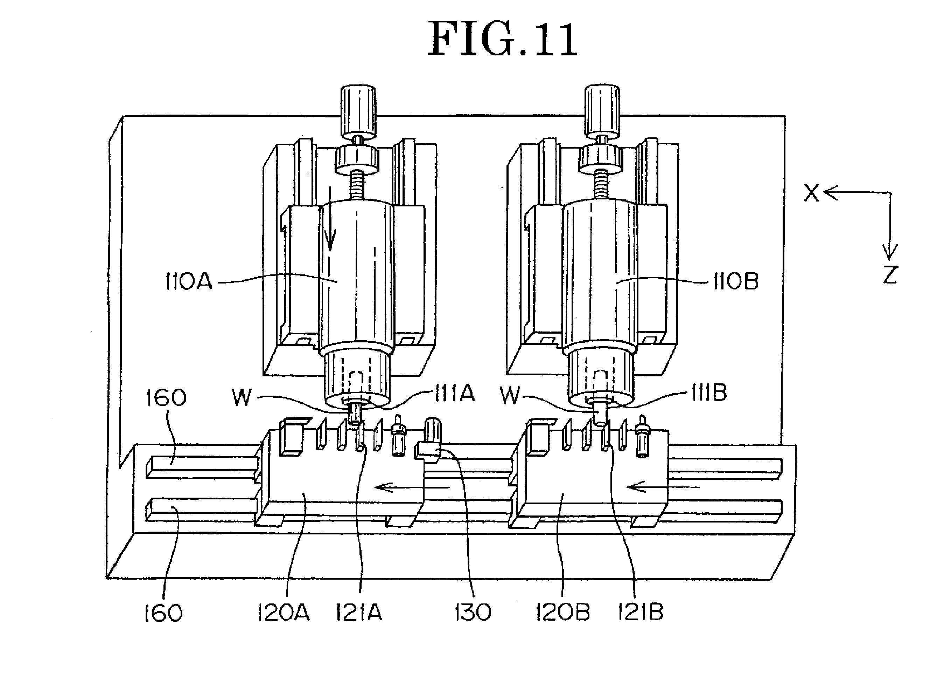

Then, the workpiece W held by the first and second spindles 111A and 111B is machined by abutting with the respective selected tools 121A on the first tool rest 120A and the respective selected tools 121B on the second tool rest 120B by moving the first and second spindle slides 110A and 110B in the Z-axis direction and by moving the first and second tool rests 120A and 120B in the X-axis direction while selecting the respective tools by moving the first and second tool rests 120A and 120B in the downstream side in the forward moving direction (second operation, see FIG. 11).

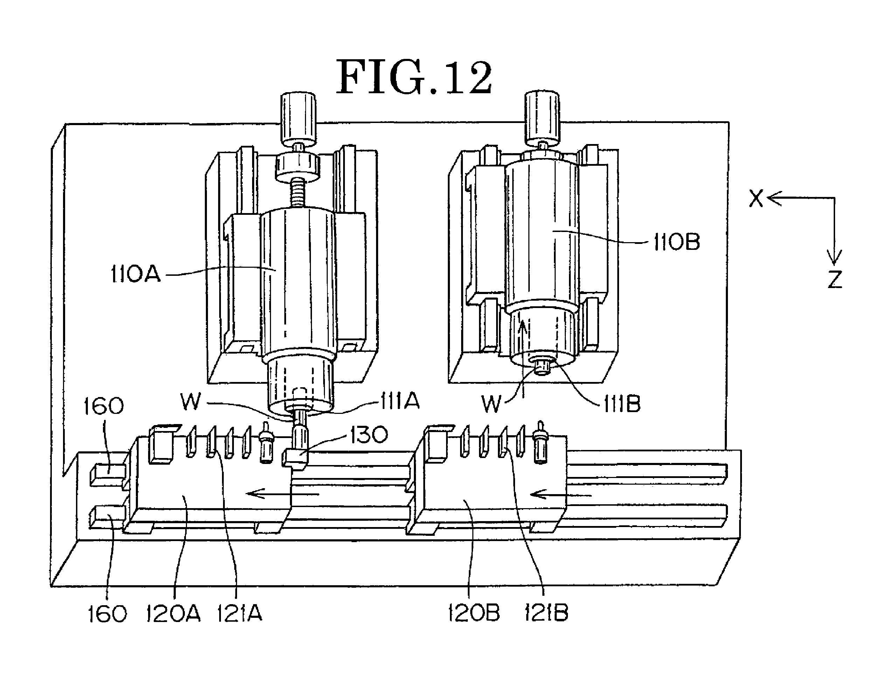

After that, the first tool rest 120A is moved in the X-axis direction in the forward moving direction to the position where the axial line of the workpiece holding means 130 is aligned with the axial line of the first spindle 111A from each other and the first spindle 111A is moved in the Z-axis direction so that the first spindle 111A approaches to the workpiece holding means 130 and the workpiece W is inserted to the chuck of the workpiece holding means 130. Then, the chuck of the first spindle 111A is opened and the chuck of the work holding means 130 is closed. Thereby, the workpiece W machined by the first spindle 111A and the tool 121A is transferred from the first spindle 111A to the workpiece holding means 130. The second spindle slide 110B is also moved in the Z-axis direction so that the second spindle 111B backs away from the second tool rest 120B (third operation, see FIG. 12).

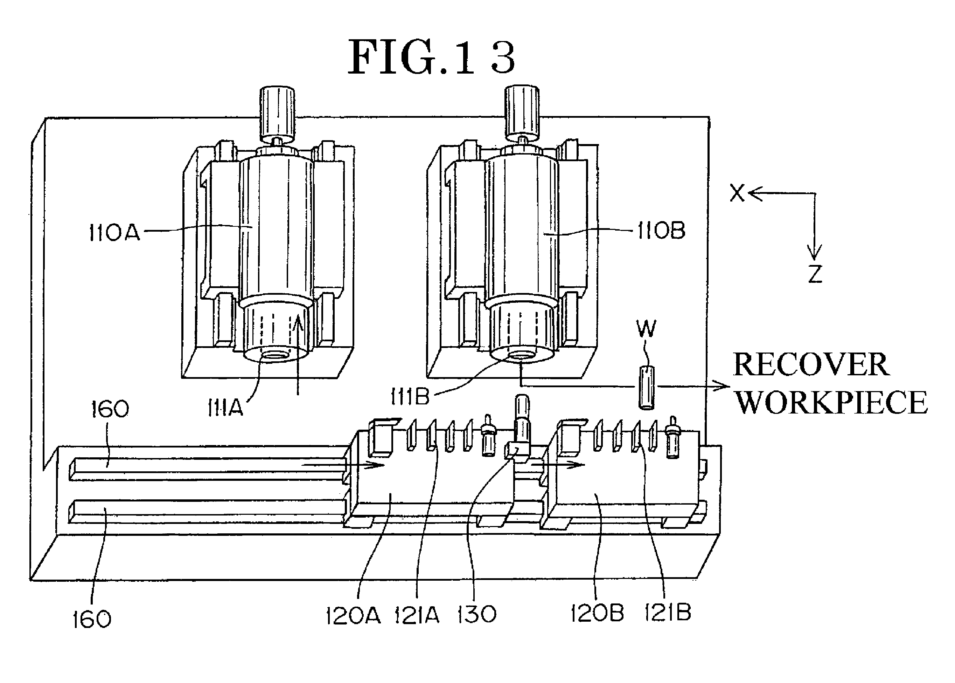

After that, the workpiece W is conveyed out of the second spindle 111B by a predetermined workpiece conveying means or the like, the first spindle slide 110A is moved in the Z-axis direction so that the first spindle 111A backs away from the workpiece holding means 130 and the first tool rest 120A is moved in the X-axis direction in the reverse moving direction to the position where the axial line of the workpiece holding means 130 is aligned with the axial line of the second spindle 111B. The second tool rest 120B is also moved in the X-axis direction to the position where it will not hamper the move of the first tool rest 120A in the X-axis direction (fourth operation, see FIG. 13). Thus, the series of normal operations is completed. The normal operation described above is repeated corresponding to a number of workpieces to be machined and others.

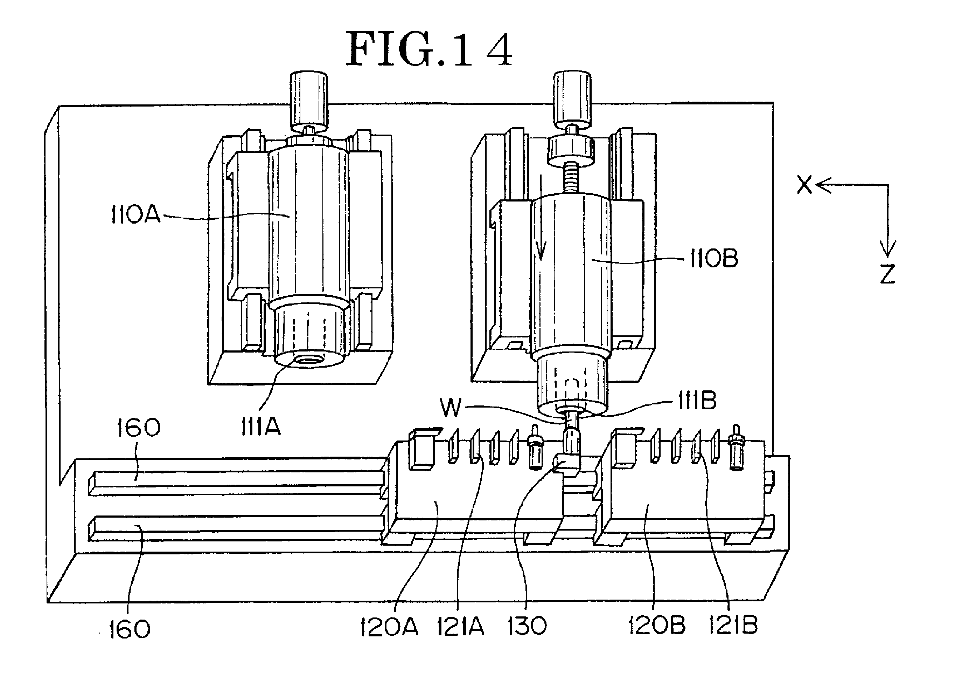

After transferring the final workpiece machined by the first spindle 111A to the workpiece holding means 130 and moving the second spindle 111B so as to face to the workpiece holding means 130 in the normal operation described above, as the ending operation, the second spindle 111B is moved in the Z-axis direction so that the second spindle 111B approaches to the workpiece holding means 130 and the workpiece W is supplied from the workpiece holding means 130 to the second spindle 111B as described above (first operation, see FIG. 14).

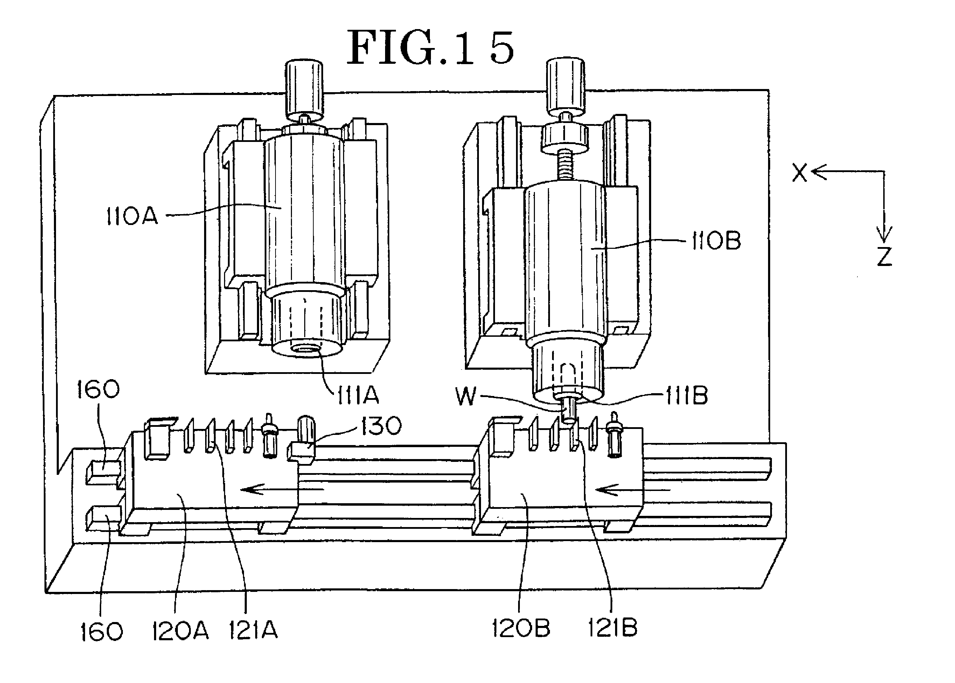

Next, the first tool rest 120A is moved in the X-axis direction to the position where it will not hamper the move of the second tool rest 120B in the X-axis direction and machines the workpiece W of the second spindle 111B by moving the second spindle slide 110B and the second tool rest 120B while selecting the tools 121B on the second tool rest 120B by moving the second tool rest 120B in the forward moving direction (second operation, see FIG. 15).

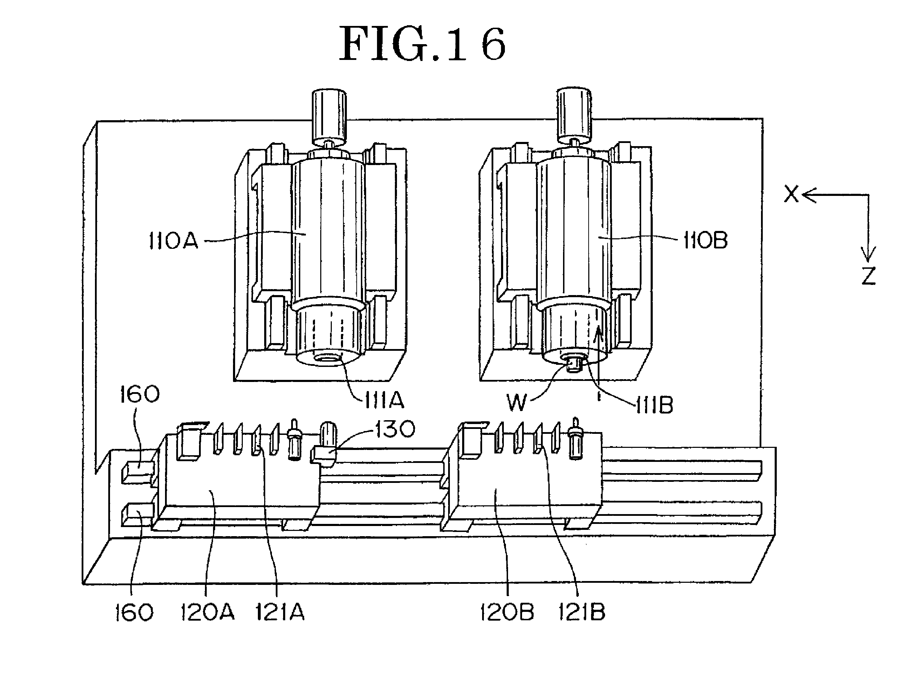

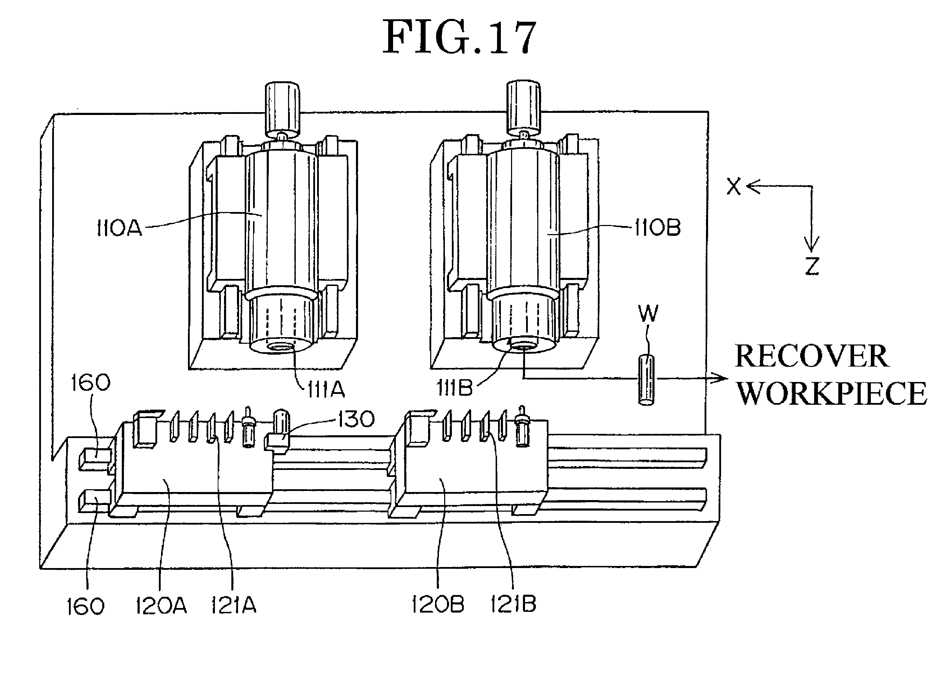

After that, the second spindle slide 110B is moved in the Z-axis direction so that the second spindle 111B backs away from the second tool rest 120B (third operation, see FIG. 16). The workpiece W of the second spindle 111B is conveyed out of the second spindle 111B (fourth operation, see FIG. 17).
Thus, the series of ending operations is completed.

As described above, the first tool rest 120A having the workpiece holding means 130 receives the machined workpiece W from the first spindle 111A corresponding to the first tool rest 120A by the workpiece holding means 130 and is moved to the position facing to the second spindle 111B neighboring the first spindle 111A to transfer the workpiece W from the workpiece holding means 130 to the second spindle 111B. Thus, the machining tool 100 of the invention can machine the workpiece W while sequentially transferring the workpiece W to the neighboring spindle 111B.

Thus, the machining tool 100 machines the workpiece while selecting the tools by moving the first tool rest 120A or the second tool rest 120B sequentially in the forward moving direction until transferring the workpiece from the first spindle 111A to the workpiece holding means 130 or until completing machining by the second spindle 11B in any of the starting operation, normal operation and ending operation in machining the workpiece, so that it is not necessary to move the first tool rest 120A or the second tool rest 120B from the forward moving direction to the reverse moving direction to select the tools and hence the moving efficiency of the first and second tool rests 120B is improved.

The workpiece holding means 130 is provided integrally with the first tool rest 120A corresponding to the one spindle 111A and moves integrally with the first tool rest 120A, so that the workpiece holding means 130 may be faced with the first and second spindles 111A and 111B to transfer the workpiece W by moving the tool rests 120A and 120B, no mechanism or the like dedicated only for moving the workpiece holding means 130 is necessary and the workpiece W may be transferred by the simple structure.

It is noted that although the case of providing the workpiece holding means 130 integrally on the first tool rest 120A has been explained in the embodiment described above, it is possible to arrange so as to provide the workpiece holding means 130 integrally on the second tool rest 120B.
However, because the second tool rest 120B must be moved in the X-axis direction so that the axial line of the workpiece holding means 130 is aligned with the axial line of the first spindle 111A in this case, the first tool rest 120A must be moved and evacuated to position where the first tool rest 120A does not hamper the move of the second tool rest 120B in the X-axis direction in the workpiece machining process.
Because the workpiece holding means 130 may be structured simply by the chuck capable of transferring the workpiece to/from the spindles 111A and 111B, a mechanism for transferring the workpiece to the both spindles 111A needs not be enlarged in the height direction and the overall height of the machine may be suppressed low.

The second tool rest 120B neighboring the first tool rest 120A having the workpiece holding means 130 is arranged such that the moving range of the second tool rest 120B corresponding to the neighboring spindle 111B is set so that at least part thereof overlaps with the moving range of the first tool rest 120A and such that the second tool rest 120B is slid and moved to the position for avoiding the tool rests 120A and 120B from abutting from each other in transferring the workpiece W between the neighboring spindle 111B and the workpiece holding means 130, so that it is possible to transfer the workpiece W smoothly while avoiding the tool rests 120A and 120B from abutting from each other.

Then, because the machining tool of the present embodiment is arranged to machine the workpiece W by sequentially transferring to the plurality of spindles 111B that perform post-machining through the workpiece holding means 130 after supplying the new workpiece W as a material to be machined to the first spindle 111A that performs the fore-front machining among the plurality of spindles 111A and 111B, the workpiece W may be machined sequentially by the respective spindles 111A and 111B just by providing one workpiece supplying means without providing the workpiece supplying means for supplying a new workpiece W per each of the plurality of spindles 111A and 111B.

Still more, because the plurality of spindles 111A and 111B are juxtaposed in the X-axis direction while directing the respective workpiece holding side end surfaces in the same one direction corresponding to the plurality of tool rests 120A and 120B juxtaposed in the X-axis direction, the all of the spindles 111A and 111B may be handled from a work area in the same one direction and tooling and maintenance works of the spindles 111A and 111B may be readily carried out.

Still more, the tool rests 120A and 120B are mounted on the same rails 160 and are respectively movably supported on the common track extending in the X-axis direction in the present embodiment. Therefore, a space for installing the tool rests required in the Z-axis direction is minimized and it becomes possible to avoid the whole machine from being enlarged in the Z-axis direction. However, it is also possible to arrange such that the tool rests 120A and 120B are mounted on different rails 160A and 160B and are supported respectively movably on different tracks extending respectively in the X-axis direction.

Still more, a concrete number of the spindles 111A and 111B and of the tool rests 120A and 120B may be any number as long as the number is two or more, respectively. The workpiece recovering means and the workpiece supplying means may be structured in any form and disposed in any mode.

It is also noted the workpiece holding means 130 may have any mode in concrete. For example, a collet chuck, a vacuum chuck, a three-claw chuck, a four-claw chuck and the like may be used.

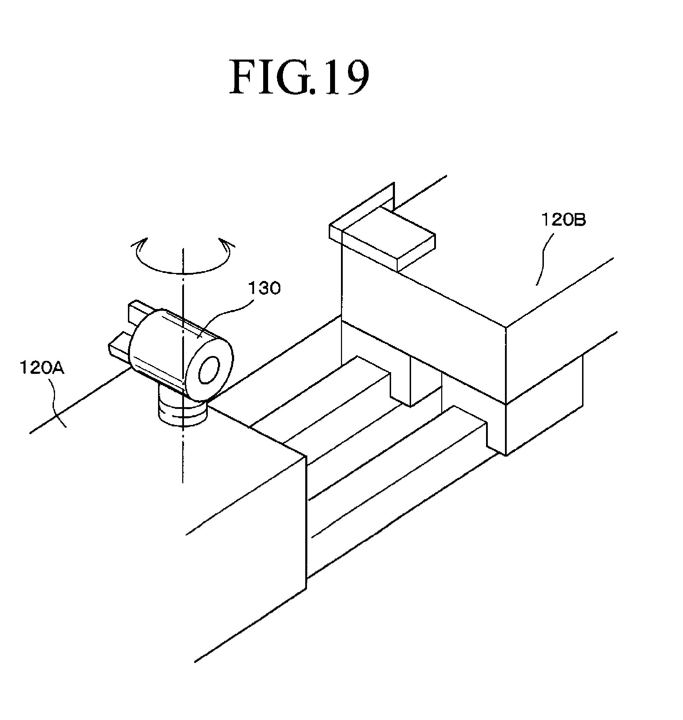

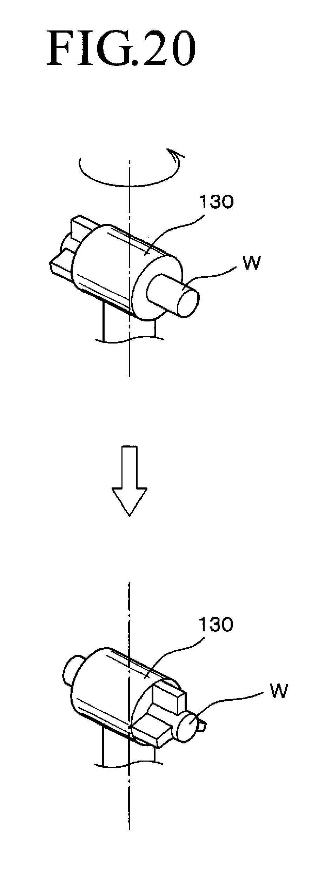

As another embodiment of the workpiece holding means 130, the workpiece holding means 130 may be arranged so as to be turnable centering on an axial line orthogonal to the X- and Z-axes as shown in FIG. 19. In this case, the workpiece holding means 130 is structured so that a machining-side end of the workpiece received from the first spindle 111A projects out of the side opposite from the inserted end. For instance, the workpiece holding means 130 may be structured to have a hollow holding part and a chuck as shown in FIG. 20. In this case, the workpiece may be held in the state in which the workpiece machining-side end projects out of the side opposite from the inserted end by grasping the workpiece by the chuck while projecting the both ends of the workpiece from the holding part. When the workpiece is supplied from the workpiece holding means 130 to which the workpiece is transferred from the first spindle 111A to the second spindle 111B, the workpiece holding means 130 turns by 180 degrees and the second spindle 111B holds the workpiece by grasping the machined side machined by the first spindle 111A. Thereby, the second spindle 111B may machine the end of the non-machined side of the workpiece. The workpiece W may be machined variously and efficiently by sequentially machining the both ends of the workpiece by the first and second spindles 111A and 111B as described above.

It is noted that the workpiece holding means 130 may hold the workpiece W by any means such as nipping, adsorption, insertion to a hole and the like as long as the workpiece holding means 130 can steadily transfer the workpiece W to the spindles 111A and 111B even if the orientation of the workpiece W is turned by 180 degrees.

### INDUSTRIAL APPLICABILITY

As described above, the machining tool of the invention is suitably applied to a CNC multi-spindle lathe system and the like that cuts a plurality of parts of a workpiece by a plurality of tools.

## Claims

1. A machining tool comprising a plurality of spindles that hold workpieces on the side of one end surface thereof and a plurality of tool rests corresponding to the respective spindles;
the respective spindles being juxtaposed in the X-axis direction orthogonal to the Z-axis direction that is an axial direction thereof while directing a workpiece holding-side end surface in the same one direction;
the respective tool rests being disposed movably in the X-axis direction; and
the machining tool machining the workpiece held by the spindle by a tool attached on the tool rest by moving the tool rest in the X-axis direction and moving the spindle and the tool rest relatively in the Z-axis direction;
wherein the respective tool rests are disposed so as to face to the spindles on the side of the end surface of the corresponding spindles;
a workpiece holding means for holding the workpiece is provided at least on one of the two neighboring tool rests;
a moving range of the tool rest having the workpiece holding means is set so as to include position where the both spindles face to the workpiece holding means so that the workpiece may be transferred between the one spindle corresponding to the tool rest and the other spindle neighboring the one spindle; and
a moving range of the tool rest corresponding to the neighboring spindle is set so that at least part thereof overlaps with the moving range of the one tool rest and so that the tool rest slides to position for avoiding the tool rests from abutting from each other in transferring the workpiece between the neighboring spindle and the workpiece holding means.

2. The machining tool according to Claims 1, wherein the tool rests are provided respectively movably on a common track extending in the X-axis direction.

3. The machining tool according to Claim 1, wherein the tool rests are provided respectively movably on different tracks extending in the X-axis direction.

4. The machining tool according to any one of Claims 1 through 3, wherein said workpiece holding means is attached turnably centering on an axial line orthogonal to the X-axis and Z-axis directions.
